(19) Europäisches Patentamt
European Patent Office
Office européen des brevets

(11) **EP 3 943 981 A1**

(12) **EUROPÄISCHE PATENTANMELDUNG**

(43) Veröffentlichungstag:
**26.01.2022   Patentblatt 2022/04**

(21) Anmeldenummer: **20187193.6**

(22) Anmeldetag: **22.07.2020**

(51) Internationale Patentklassifikation (IPC):
**G01S 15/931** (2020.01)   **G01S 15/87** (2006.01)
**G01S 15/42** (2006.01)   **G01S 7/539** (2006.01)

(52) Gemeinsame Patentklassifikation (CPC):
**G01S 7/539; G01S 15/42; G01S 15/876;
G01S 15/931; G10K 11/346**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Elmos Semiconductor SE
44227 Dortmund (DE)**

(72) Erfinder: **Ackermann, Dimitri
44309 Dortmund (DE)**

(74) Vertreter: **Banse & Steglich
Patentanwälte PartmbB
Patentanwaltskanzlei
Herzog-Heinrich-Straße 23
80336 München (DE)**

Bemerkungen:
Geänderte Patentansprüche gemäss Regel 137(2) EPÜ.

(54)   **VERFAHREN UND VORRICHTUNG ZUM ERFASSEN VON UMGEBUNGSOBJEKTEN MIT EINEM ULTRASCHALLSENSORSYSTEM SOWIE ULTRASCHALLSENSORSYSTEM**

(57)   Die Erfindung betrifft ein Verfahren zum Betreiben eines Ultraschall-Sensorsystems (1) mit mehreren Ultraschallsendern und mehreren Ultraschallempfängern zum Erfassen von Umgebungsobjekten (O) in einem Erfassungsbereich, wobei insbesondere jeweils einer der Ultraschallsender und jeweils einer der Ultraschallempfänger als Ultraschallwandler (2) ausgebildet sind, mit folgenden Schritten:
- Aussenden eines Ultraschallsendesignals durch mehrere der Ultraschallsender und Empfangen eines jeweiligen Ultraschallempfangssignals durch die Ultraschallempfänger,
- Auswerten der empfangenen Ultraschallempfangssignale, um aus einer Laufzeitmessung eine Signalverlaufsangabe zu bestimmen, die den zeitlichen Verlauf der Signalstärke mit Bezug zu dem Aussendezeitpunkt des Ultraschallsendesignals angibt, wobei Signallaufzeiten jedes der Maxima der Signalverlaufsangabe ermittelt werden, die einen Abstand von möglichen Reflexionspunkten angeben;
- Auswerten der empfangenen Ultraschallempfangssignale, um in einer Phasendifferenzmessung Phasendifferenzen ($\Phi_{meas}$) zwischen jeweils zwei Ultraschallempfangssignalen von mindestens einem Paar von Ultraschallempfängern einer Sensorbaugruppe (7) zu den Zeitpunkten einander entsprechender Maxima bereitzustellen, wobei den Phasendifferenzen ($\Phi_{meas}$) jeweils Richtungsangaben zugeordnet werden, die Richtungen zu möglichen Reflexionspunkten angeben;
- Ermitteln von realen Reflexionspunkten (R) abhängig von dem Abstand von möglichen Reflexionspunkten und abhängig von den Richtungen zu möglichen Reflexionspunkten.

Fig. 1

**Beschreibung**

Technisches Gebiet

Die Erfindung betrifft Ultraschall-Sensorsysteme zum Erfassen von in einer Umgebung befindlichen Umgebungsobjekten.

Technischer Hintergrund

Ultraschallsensoren finden vielfältige Anwendung bei der Erfassung von Umgebungsobjekten in einem Erfassungsbereich und zum Ermitteln deren Abstands. Beispielsweise werden in Kraftfahrzeugen als Einparkhilfe am vorderen und hinteren Stoßfänger Ultraschall-Sensorsysteme mit mehreren Ultraschallsensoren eingesetzt, die den Abstand zu einem sich nähernden Umgebungsobjekt detektieren und so den Fahrer bei einem Rangieren unterstützen.

Bei heutigen Ultraschall-Sensorsystemen wird jedoch lediglich der Abstand zu einem detektierten Umgebungsobjekt ausgewertet. Bei mehreren Umgebungsobjekten wird als Abstand zu einem Umgebungsobjekt der jeweils kürzeste Abstand angenommen und zur Signalisierung einer entsprechenden Warnung an den Fahrer des Kraftfahrzeugs verwendet. Jedoch können auch Umgebungsobjekte, die das Rangieren des Fahrzeugs nur unwesentlich behindern, wie beispielsweise Bordsteinkanten, ebenfalls zu einer Erkennung führen und der Fahrer gegebenenfalls gewarnt werden, obwohl kein das Rangieren beeinträchtigendes Umgebungsobjekt vorhanden ist oder der Abstand zu einem solchen Umgebungsobjekt deutlich größer ist. Auch für andere Anwendungen, insbesondere Visualisierungsanwendungen, kann es sinnvoll sein, eine 3D-Abbildung der im Umgebungsbereich des Kraftfahrzeugs vorliegenden Umgebungsobjekte bereitzustellen. Insbesondere kann eine solche 3D-Abbildungsinformation auch für Anwendungen des autonomen oder halbautonomen Fahrens verwendet werden. Die 3D-Abbildung kann einem Abstandsprofil oder einer Menge von 3D-Reflexionspunkten in Form einer Punktewolke entsprechen.

Bei der Auswertung von Ultraschallsensorsignalen können zur Lokalisierung von Umgebungsobjekten verschiedene Arten von Informationen ausgewertet werden. Über Signallaufzeitmessungen kann ein Abstand des detektierten Umgebungsobjekts ermittelt werden.

Bei der Lokalisierung von mehreren Umgebungsobjekten mithilfe von Abstandsmessungen mehrerer Ultraschallsensoren besteht ein Nachteil darin, dass die Zuordnung der durch die unterschiedlichen Sensoren ermittelten Abstände nicht eindeutig ist und somit viele falsche Positionen von Umgebungsobjekten bestimmt werden können.

Weiterhin kann insbesondere bei Verwendung einer entsprechenden Ultraschallsensorbaugruppe aus mehreren Ultraschallsensoren auch anhand einer Phasenverschiebung zwischen Empfangssignalen mehrerer Ultraschallsensoren einer Baugruppe auf eine Richtung geschlossen werden, in der sich das zu detektierende Umgebungsobjekt befindet. Nachteilig ist hierbei, dass eine eindeutige Richtungsbestimmung Abstände zwischen den empfangenden Ultraschallsensoren einer Baugruppe erfordert, die kleiner als eine halbe Wellenlänge sein müssen. Diese kleinen Ultraschallsensoren wären jedoch sehr klein und dadurch ineffizient.

Es ist Aufgabe der vorliegenden Erfindung, ein verbessertes Verfahren zum Erfassen einer 3D-Abbildung bezüglich eines oder mehrerer Umgebungsobjekte zur Verfügung zu stellen, das die Nachteile der einzelnen Messverfahren vermeidet und eine verbesserte Information über die Position von Umgebungsobjekten im Erfassungsbereich eines Ultraschall-Sensorsystems bereitstellt.

Offenbarung der Erfindung

Diese Aufgabe wird durch das Verfahren zum Betreiben eines Ultraschall-Sensorsystems mit mehreren Ultraschallsendern und mehreren Ultraschallempfängern zum Erfassen von Umgebungsobjekten in einem Erfassungsbereich gemäß Anspruch 1 sowie durch die Vorrichtung und das Ultraschall-Sensorsystem gemäß den nebengeordneten Ansprüchen gelöst.

Weitere Ausgestaltungen sind in den abhängigen Ansprüchen angegeben.

Gemäß einem ersten Aspekt ist ein Verfahren zum Betreiben eines Ultraschall-Sensorsystems mit mehreren Ultraschallsendern und mehreren Ultraschallempfängern zum Erfassen von Umgebungsobjekten in einem Erfassungsbereich vorgesehen, wobei insbesondere jeweils einer der Ultraschallsender und einer der Ultraschallempfänger gemeinsam in einem Ultraschallwandler ausgebildet sind, mit folgenden Schritten:

- Aussenden eines Ultraschallsendesignals durch mehrere der Ultraschallsender und Empfangen eines jeweiligen Ultraschallempfangssignals durch die Ultraschallempfänger,
- Auswerten der empfangenen Ultraschallempfangssignale, um jeweils aus einer Laufzeitmessung eine Signalverlaufsangabe zu bestimmen, die den zeitlichen Verlauf der Signalstärke mit Bezug zu dem Aussendezeitpunkt des Ultraschallsendesignals angibt, wobei Signallaufzeiten jedes der Maxima der Signalverlaufsangabe ermittelt werden, die einen Abstand von möglichen Reflexionspunkten angeben;

- Auswerten der empfangenen Ultraschallempfangssignale, um Phasendifferenzen zwischen jeweils zwei Ultraschallempfangssignalen von mindestens einem Paar von Ultraschallempfängern einer Sensorbaugruppe zu den Zeitpunkten einander entsprechender Maxima bereitzustellen, wobei den Phasendifferenzen jeweils Richtungsangaben zugeordnet werden, die Richtungen zu möglichen Reflexionspunkten angeben;
- Ermitteln von realen Reflexionspunkten abhängig von dem Abstand von möglichen Reflexionspunkten und abhängig von den Richtungen zu möglichen Reflexionspunkten.

Weiterhin können die empfangenen Ultraschallempfangssignale ausgewertet werden, um aus den jeweiligen Signalverlaufsangaben Abstandsangaben zu bestimmen, wobei die Abstandsangaben für die Maxima der Signalverlaufsangaben ermittelt werden, um durch Kombinationen von Abstandsmessungen Kandidaten für Reflexionspunkte anzugeben.

Es kann vorgesehen sein, dass die empfangenen Ultraschallempfangssignale ausgewertet werden, um die Phasendifferenzen zwischen jeweils zwei Ultraschallempfangssignalen von mindestens einem Paar von Ultraschallempfängern einer Sensorbaugruppe, insbesondere zu einem mittleren Zeitpunkt zwischen den Zeitpunkten von zwei Maxima, bereitzustellen, deren zeitliche Differenz geringer ist eine Schalllaufzeit zwischen den jeweils zwei Ultraschallempfängern der Sensorbaugruppe.

Eine Idee des obigen Verfahrens besteht darin, bei einem Ultraschallsensorsystem mit mehreren Sensorbaugruppen Informationen aus einer Laufzeitmessung und einer Phasendifferenzmessung zu kombinieren, um daraus Positionen von Reflexionspunkten an Umgebungsobjekten zu bestimmen. Das obige Verfahren nutzt dazu die Gesamtsignalwege zwischen Ultraschallsender und Ultraschallempfänger, die sich aus den jeweiligen Laufzeitmessungen und der Schallgeschwindigkeit ergeben, sowie eine Messung einer jeweiligen Phasendifferenz zwischen von mehreren Ultraschallempfängern empfangenen Ultraschall-Empfangssignalen.

Ein Ultraschall-Sensorsystem weist in der Regel eine Anzahl von Ultraschallsendern und Ultraschallempfängern auf, wobei ein Ultraschallsender und ein Ultraschallempfänger in der Regel baulich gemeinsam in einem Ultraschallwandler ausgebildet sind. Ein solcher Ultraschallwandler nutzt eine Membran sowohl zum Senden eines Ultraschall-Sendesignals als auch zum Empfangen eines an einem oder mehreren Reflexionspunkten eines oder mehrerer Umgebungsobjekte reflektierten Ultraschall-Empfangssignals.

In einem Ultraschall-Sensorsystem werden die Ultraschallwandler nacheinander angesteuert, um ein entsprechendes Ultraschall-Sendesignal auszugeben. Dieses Ultraschall-Sendesignal kann ein Ultraschallimpuls oder ein frequenzmoduliertes oder phasenmoduliertes Ultraschallsignal sein. Die Ultraschallwandler empfangen beim Vorhandensein eines oder mehrerer Umgebungsobjekte im Erfassungsbereich ein reflektiertes Ultraschallsignal als Ultraschall-Empfangssignal. Das durch den Ultraschallwandler erfasste Ultraschall-Empfangssignal wird in ein elektrisches Wandler-Empfangssignal gewandelt. In der Regel wird im Ultraschallwandler das Wandler-Empfangssignal verarbeitet und eine Signalverlaufsangabe erzeugt, die einen zeitlichen Verlauf der Signalstärke (Amplitudenstärke) des Ultraschall-Empfangssignals angibt. Die Signalverlaufsangabe gibt eine Hüllkurve des Ultraschall-Empfangssignals an, wobei die Hüllkurve einem zeitlichen Amplitudenverlauf über einen Empfangszeitraum entspricht. Entsprechend der Anzahl von Reflexionspunkten an den Umgebungsobjekten, an denen das Ultraschall-Sendesignal reflektiert wird, kann die Signalverlaufsangabe mehrere Maxima aufweisen. Im Falle von frequenzmodulierten oder phasenmodulierten Signalen können geeignete Filter verwendet werden, um die Signalverlaufsangabe zu erzeugen.

Da die Ultraschallwandler einer nach dem anderen zum Senden des Ultraschall-Sendesignals in einer Sendephase angesteuert werden, stellt zu jeder Sendephase jeder der Ultraschallwandler ein entsprechendes Ultraschall-Empfangssignal bereit. Beim Betreiben des Ultraschall-Sensorsystems können daher jeweils Signalwege des Ultraschallsignals zwischen einem sendendem Ultraschallwandler und demselben und anderen empfangenden Ultraschallwandlern ausgewertet werden. Bei der Auswertung kann beispielsweise eine Signallaufzeitinformation vom betreffenden sendenden Ultraschallwandler (Ultraschallsender) zum Reflexionspunkt und vom Reflexionspunkt zum empfangenden Ultraschallwandler (Ultraschallempfänger) berücksichtigt werden. Somit ist die jeweilige Signalverlaufsangabe durch die Signallaufzeiten zu den Reflexionspunkten bestimmt, wobei die Signalverlaufsangabe auch durch den Empfang mehrerer Ultraschallempfangssignale von einem oder mehreren Reflexionspunkten eines oder mehrerer Umgebungsobjekte bestimmt sein kann. Die Laufzeiten der Ultraschallsignale werden dabei durch Maxima der Signalverlaufsangabe angezeigt. Aufgrund der unterschiedlichen Entfernungen der Reflexionspunkte zu den jeweiligen Ultraschallwandlern ist eine Zuordnung der Maxima der Signalverlaufsangabe zu den einzelnen Reflexionspunkten jedoch nicht ohne Weiteres möglich, so dass sich bei mehreren Ultraschallwandlern die Reihenfolge der durch die Maxima detektierten Reflexionspunkte voneinander unterscheiden kann.

Weiterhin können Ultraschallsensorsysteme mehrere Sensorbaugruppen von jeweils mehreren Ultraschallwandlern aufweisen. In jeder Sensorbaugruppe sind die Ultraschallwandler so nebeneinander angeordnet, dass eine Phasendifferenz zwischen jeweils zwei Ultraschall-Empfangssignalen, die auf der Reflexion eines Ultraschall-Sendesignals beruhen, ausgewertet werden kann. Dazu sind die Ultraschallwandler einer Sensorbaugruppe nahe beieinander angeordnet, so dass eine detektierte Phasendifferenz zwischen zwei Ultraschallempfangssignalen einer oder mehreren verschiedenen Empfangsrichtungen zugeordnet werden kann. Aus der Kombination von mindestens zwei Phasendifferenzmessungen zwischen jeweils zwei Ultraschallwandlern einer Sensorbaugruppe können verschiedene Richtungen, aus denen ein Ultraschallempfangssignal von einem Reflexionspunkt eintrifft, ermittelt werden.

Weiterhin können abhängig von den Abständen zu möglichen Reflexionspunkten aus den Laufzeitmessungen Kandidaten von Reflexionspunkten ermittelt werden, wobei aus den Kandidaten von Reflexionspunkten abhängig von den passenden Richtungen zu den möglichen Reflexionspunkten aus der Phasendifferenzmessung die realen Reflexionspunkte ausgewählt werden.

Kandidaten von Reflexionspunkten stellen die konsolidierten möglichen Reflexionspunkte basierend auf der Auswertung von mehreren Laufzeitmessungen oder mehreren Phasendifferenzmessungen dar. Bezüglich der Laufzeitmessung stellen somit die möglichen Reflexionspunkte alle Punkte auf der Sphäre mit dem festgestellten Abstand dar und die Kandidaten von Reflexionspunkten die aus mindestens zwei korrespondierenden, gleichzeitigen Abstandsmessungen erhaltenen Punkte.

Alternativ können abhängig von den Richtungen zu möglichen Reflexionspunkten aus der Phasendifferenzmessung Kandidaten von Reflexionspunkten ermittelt werden, wobei aus den Kandidaten von Reflexionspunkten abhängig von den Abständen von den möglichen Reflexionspunkten aus der Laufzeitmessung die realen Reflexionspunkte ausgewählt werden.

Es kann vorgesehen sein, dass abhängig von den Abständen zu möglichen Reflexionspunkten aus der Laufzeitmessung Kandidaten von Reflexionspunkten ermittelt werden, wobei abhängig von den Richtungen zu möglichen Reflexionspunkten aus der Phasendifferenzmessung Kandidaten von Reflexionspunkten ermittelt werden, wobei reale Reflexionspunkte jeweils als diejenigen Reflexionspunkte ermittelt werden, die als möglicher Kandidat für einen Reflexionspunkt sowohl aus der Laufzeitmessung als auch aus der Reflexionsmessung ermittelt worden sind.

Dieses Verfahren sieht vor, die Kandidaten für Reflexionspunkte aus der Laufzeitmessung mit den Kandidaten für Reflexionspunkte aus der Phasendifferenzmessung zu plausibilisieren, um so die tatsächlich existierenden (richtigen) realen Reflexionspunkte ermitteln zu können. Mit anderen Worten, es werden basierend auf einer Laufzeitmessung und Phasendifferenzmessungen jeweils Kandidaten von Reflexionspunkten ermittelt und als detektierte Reflexionspunkte nur diejenigen angenommen, für die ein entsprechender Kandidat aus der Laufzeitmessung und aus der Phasendifferenzmessung existiert.

Weiterhin können die Kandidaten für Reflexionspunkte aus der Laufzeitmessung mithilfe eines Optimierungsproblems ermittelt werden, als die Reflexionspunkte, für die ein Fehler bezüglich der gemessenen Signallaufstrecke unter einem vorgegebenen Schwellenwert liegt. Das Optimierungsproblem kann mit einem iterativen Ansatz, wie beispielsweise einem Gauß-Newton- oder Newton-Raphson-Verfahren gelöst werden, so dass mehrere Kandidaten für Reflexionspunkte gefunden werden können.

Insbesondere können als Kandidaten für Reflexionspunkte aus der Laufzeitmessung nur diejenigen angenommen werden, die jeweils einen Abstand von einem jeweiligen Ultraschallwandler aufweisen, der sich aus der Signallaufzeit eines von dem Ultraschallwandler ausgesendeten Ultraschallsendesignals und der Signallaufzeit eines von dem Ultraschallwandler empfangenen Ultraschallempfangssignals ergibt. Somit können sich im Falle der Verwendung von Ultraschallwandlern, die gleichzeitig Ultraschall-Sendesignale aussenden und Ultraschall-Empfangssignale empfangen, die Abstände zu den Reflexionspunkten durch das Produkt der halben Signallaufzeit und der Schallgeschwindigkeit ermittelt werden. Wenn diese so ermittelten Abstände zu den Kandidaten für Reflexionspunkte als fest angenommen werden, kann das Optimierungsproblem auf ein lineares Gleichungssystem reduziert werden.

Gemäß einer Ausführungsform können die Kandidaten für Reflexionspunkte aus der Phasendifferenzmessung mithilfe eines Optimierungsproblems ermittelt werden, als die Reflexionspunkte, für die ein Fehler bezüglich der gemessenen Phasendifferenzen unter einem vorgegebenen Schwellenwert liegt.

Kurzbeschreibung der Zeichnungen

Ausführungsformen werden nachfolgend anhand der beigefügten Zeichnungen näher erläutert. Es zeigen:

Figur 1    ein beispielhaftes Ultraschallsensorsystem mit drei Sensorbaugruppen mit jeweils drei Ultraschallwandlern und Signalwegen von Ultraschallsignalen zu Reflexionspunkten an einem Umgebungsobjekt;

Figur 2    ein Flussdiagramm zur Veranschaulichung eines Verfahrens zum Ermitteln der Position von Reflexionspunkten anhand Signallaufzeit und Phasendifferenzen von Ultraschallsignalen;

Figur 3    eine schematische Darstellung zur Veranschaulichung einer Positionsbestimmung von Reflexionspunkten basierend auf einer Laufzeitmessung;

Figur 4    eine Veranschaulichung der sich aus einer Phasendifferenzmessung ergebenden Richtungen und die Ermittlung von möglichen Reflexionspunkten; und

Figur 5    ein Diagramm eines Verlaufs der Phasendifferenz über einer Empfangsrichtung eines Ultraschallempfangssignals für zwei mit der doppelten Wellenlänge beabstandete Ultraschallwandler.

Beschreibung von Ausführungsformen

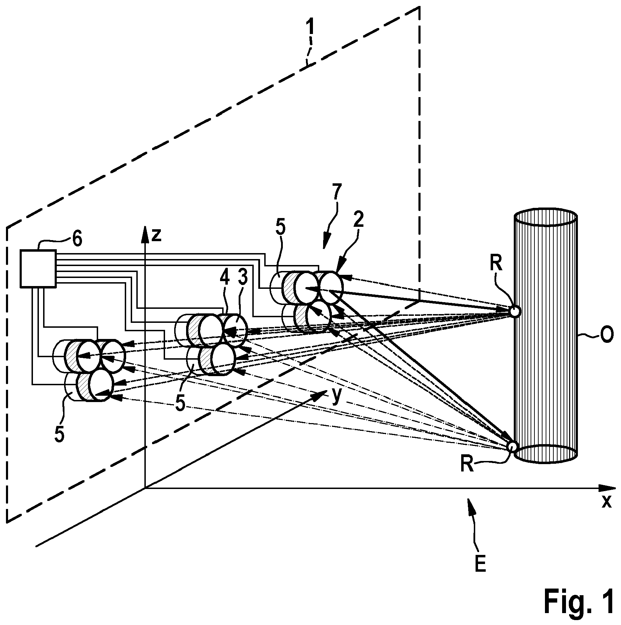

Figur 1 zeigt ein beispielhaftes Ultraschall-Sensorsystem 1 mit einer Anzahl von Ultraschallwandlern 2, die in mehrere Sensorbaugruppen 7 zusammengefasst sind. Im vorliegenden Ausführungsbeispiel sind drei Sensorbaugruppen vorgesehen, die jeweils drei Ultraschallwandler 2 umfassen. Die Ultraschallwandler 2 vereinen die Funktion eines Ultraschallsenders und Ultraschallempfängers in einem Bauteil. Alternativ kann das Ultraschall-Sensorsystem 1 mit separaten Ultraschallsendern und Ultraschallempfängern ausgebildet sein.

Die Ultraschallwandler 2 weisen in bekannter Weise jeweils eine Schwingmembran 3 auf, die mithilfe eines Piezoaktuators 4 angeregt werden kann, um ein Ultraschallsendesignal zu erzeugen. Die Frequenz des Ultraschallsendesignals kann beispielsweise zwischen 30 kHz und 100 kHz, vorzugsweise zwischen 40 kHz und 60 kHz betragen. Dieselbe Schwingmembran 3 kann zum Empfangen eines Ultraschall-Empfangssignals verwendet werden, das die Schwingmembran 3 zum Schwingen anregt, wobei der Piezoaktuator 4 ein entsprechendes elektrisches Wandler-Empfangssignal bereitstellt.

Die Ultraschallwandler der Baugruppe 7 können lokal benachbart angeordnet sein und weisen vorzugsweise eine identische Ausrichtung ihrer Hauptempfangsrichtungen auf, d. h. parallele Flächennormalen ihrer Sensormembranen. Die Anordnung der Ultraschallwandler 2 der Baugruppe 7 kann im Wesentlichen beliebig sein. Insbesondere müssen die Ultraschallwandler 2 nicht symmetrisch zueinander angeordnet sein, solange deren Positionen relativ zueinander bekannt ist. Zudem müssen für eine Erfassung von Raumrichtungen die Ultraschallwandler 2 eine Fläche aufspannen, d. h. bei mehr als zwei Ultraschallwandlern sollte diese sollten nicht geradlinig angeordnet sein.

Die Ultraschallwandler 2 sind jeweils mit einer Ansteuerelektronik 5 versehen, die ausgebildet ist, um einen Impuls eines Ultraschallsendesignals durch Ansteuerung des Piezoaktuators 4 zu erzeugen. Weiterhin ist die Ansteuerelektronik 5 ausgebildet, um ein elektrisches Wandlerempfangssignal mit bekanntem zeitlichen Bezug zu dem Ultraschall-Sendesignal von dem Piezoaktuator 4 zu erzeugen. Das elektrische Wandlerempfangssignal wird entsprechend einer Anregung durch das empfangene Ultraschall-Empfangssignal erzeugt.

Der Betrieb der Ultraschallwandler 2 wird durch eine gemeinsame Steuereinheit 6 gesteuert. Insbesondere triggert die Steuereinheit 6 das Aussenden eines Ultraschall-Sendesignals durch einen ausgewählten Ultraschallwandler 2. Dieses Ultraschallsendesignal basiert vorzugsweise auf einer Rechteckansteuerung zu einem in der Steuereinheit 6 bekannten Sendezeitpunkt. Die Ansteuerelektronik 5 des betreffenden Ultraschallwandlers 2 erfasst ab dem Aussendezeitpunkt des Ultraschall-Sendesignals, z. B. zum Zeitpunkt des Endes des Signalimpulses des Ultraschall-Sendesignals, die Anregungen der Schwingmembran 3 und liefert einen zeitlichen Verlauf der Amplitudenstärke des Schwingungssignals und den zeitlichen Verlauf der Phasendifferenzen zwischen allen Ultraschallempfängern an die Steuereinheit 6 als Signalverlaufsangabe. Mit anderen Worten, die Signalverlaufsangabe entspricht einer Zeitreihe von Amplitudenwerten des elektrischen Wandlerempfangssignals des Ultraschallwandlers 2 und Phasendifferenzen zwischen allen Ultraschallwandlern 2. Da die Erfassung des Ultraschallempfangssignals zu einem bekannten Zeitpunkt (Aussendezeitpunkt des Ultraschallsendesignals) gestartet wird oder der zeitliche Bezug zum Sendezeitpunkt in sonstiger Weise bekannt ist, ist der zeitliche Bezug zwischen dem Ultraschall-Sendesignal und dem Ultraschall-Empfangssignal in der Steuereinheit 6, d. h. dem Wandler-Empfangssignal, für alle Ultraschallwandler 2 bekannt.

Die Darstellung der Figur 1 zeigt Signalstrecken für das Ultraschallsendesignal (durchgezogener Pfeil) beim Aussenden und für die an Reflexionspunkten R an dem Umgebungsobjekt O reflektierten Ultraschallempfangssignale (gestrichelte Pfeile) für das Empfangen. Die an den verschiedenen Reflexionspunkten R reflektierten Ultraschallempfangssignale überlagern sich bei den empfangenden Ultraschallwandlern 2, so dass die Signalverlaufsangabe des empfangenen Ultraschall-Empfangssignals in der Regel mehrere Signalstärkemaxima aufweist. Die Reflexionspunkte entsprechen Punkten auf einem Umgebungsobjekt O, die das Ultraschallsendesignal in Richtung zu den Ultraschallwandlern reflektieren, wobei die Oberfläche der Reflexionspunkte R bevorzugt eine Flächennormale aufweist, die zu den Ultraschallwandler 2 ausgerichtet ist. Die Detektion der Reflexionspunkte R ermöglicht die Bestimmung der Position der ungefähren Position der Umgebungsobjekte O.

Beim Betrieb des Ultraschallsensorsystems 1 steuert die Steuereinheit 6 die Ultraschallwandler 2 bzw. die Ultraschallsender (bei separater Ausführung von Ultraschallsendern und Ultraschallempfängern) separat nacheinander an und empfängt von den Ultraschallwandlern 2 bzw. den Ultraschallempfängern die Signalverlaufsangaben für die entsprechend empfangenen Ultraschall-Empfangssignale. Die Signalverlaufsangaben werden an die Steuereinheit 6 kommuniziert. Alternativ können bereits in den Ansteuerelektroniken 5 Abstandsangaben ermittelt und an die Steuereinheit 6 übermittelt werden.

Weiterhin wird durch die Ultraschallwandler 2 in jeder Sensorbaugruppe 7 eine Phasendifferenz der empfangenen Ultraschall-Empfangssignale zwischen jeweils zwei der Ultraschallwandler 2 der betreffenden Sensorbaugruppe 7, insbesondere durch die Ansteuerelektronik 5, ermittelt und an die Steuereinheit 6 kommuniziert. Pro Sensorbaugruppe mit $N$ Ultraschallwandlern 2 können so $\frac{(N-1)^2+N-1}{2}$ Phasendifferenzen bestimmt werden.

Die Signalverlaufsangaben/Abstandsmessungen und Phasendifferenzen aller Sensorbaugruppen 7, die in der zentralen Steuereinheit 6 vorliegen, ermöglichen die Ermittlung von Reflexionspunkten R durch gegenseitige Plausibilisierung der Ergebnisse aus den Messverfahren, nämlich der Laufzeitmessung und der Phasendifferenzmessung.

Für jedes ausgesendete Ultraschall-Sendesignal enthalten die empfangenen Ultraschall-Empfangssignale der empfangenden Ultraschallwandler 2 (Ultraschallempfänger) eine Information über mögliche Positionen von im Erfassungsbereich E befindlichen Reflexionspunkten R, die das Vorhandensein eines oder mehrerer Umgebungsobjekte O anzeigen. Dazu können Signallaufzeiten des Ultraschallsignals zwischen dem Sendezeitpunkt des Aussendens des Ultraschallsendesignals und dem einen oder den mehreren Empfangszeitpunkten des Empfangens von an einem oder mehreren Reflexionspunkten R reflektierten Ultraschallsignalen ausgewertet werden, um Angaben über die Entfernungen der Reflexionspunkte R von dem jeweiligen empfangenden Ultraschallwandler 2 zu erhalten. Zudem können die Phasendifferenzen zwischen den Ultraschallempfangssignalen von Ultraschallwandlern einer Sensorbaugruppe jeweils eine Richtung bezüglich der Flächennormalen der Schwingmembran des empfangenden Ultraschallwandlers angeben.

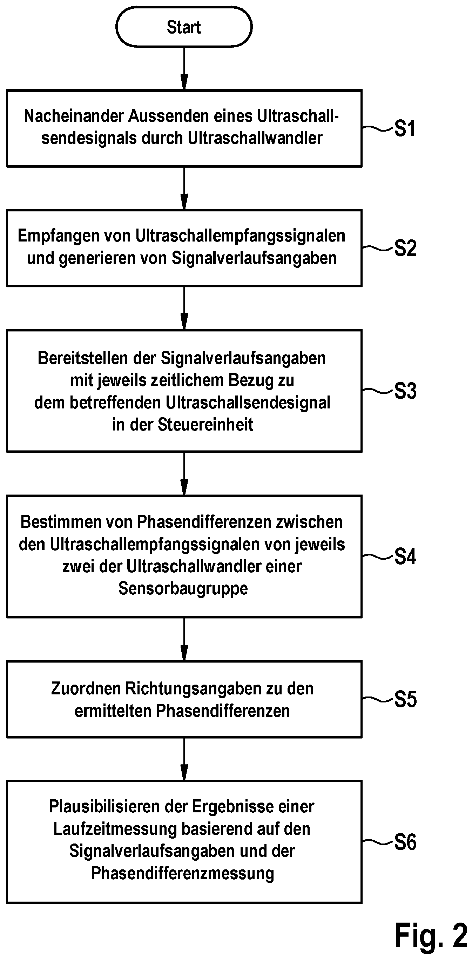

Die Auswertung der von den Ultraschallwandlern 2 erhaltenen Information erfolgt in der Steuereinheit 6. In Figur 2 ist ein Flussdiagramm zur Veranschaulichung eines Verfahrens zum Ermitteln von Positionen von Reflexionspunkten R auf Umgebungsobjekten O in einem Erfassungsbereich des Ultraschallsensorsystems 1 gezeigt. Nachfolgend wird das Verfahren zur Bestimmung von Reflexionspunkten R im Erfassungsbereich anhand einer Anzahl Ns von unterschiedlichen Ultraschallwandlern 2 gesendeten Ultraschall-Sendesignalen und von einer Anzahl $N_r$ von Ultraschallempfängern empfangenen Ultraschall-Empfangssignalen beschrieben.

In Schritt S1 werden die Ultraschallwandler 2 von der Steuereinheit 6 nacheinander angewiesen, ein Ultraschall-Sendesignal auszusenden. Dieses Ultraschall-Sendesignal wird an einem oder mehreren Reflexionspunkten an Umgebungsobjekten O im Erfassungsbereich E reflektiert.

In Schritt S2 wird von jedem der Ultraschallwandler 2 ein entsprechendes Ultraschall-Empfangssignal empfangen und in dem jeweiligen Ultraschallwandler 2 in eine Signalverlaufsangabe umgewandelt, die eine Hüllkurve darstellt. Diese Hüllkurve gibt den Amplitudenverlauf des Ultraschall-Empfangssignal an.

Die Signalverlaufsangaben, die in jedem der Ultraschallwandler 2 aus dem Wandler-Empfangssignale gebildet werden, oder bereits daraus abgeleitete Abstandsangaben werden in Schritt S3 an die Steuereinheit 6 übermittelt. Dazu kann die Signalverlaufsangabe mit einem Zeitstempel versehen sein, das einen zeitlichen Bezug zum Aussenden des zugrundeliegenden Ultraschallsendesignals angibt. Alternativ kann der zeitliche Bezug zu dem Ultraschallsendesignal auch in der Steuereinheit 6 ermittelt werden.

Die Signalverlaufsangaben weisen jeweils je nach Anzahl von Reflexionspunkten R im Erfassungsbereich E, an denen das betreffende Ultraschall-Sendesignal reflektiert wurde, eine entsprechende Anzahl von lokalen Maxima auf. Jedes der Maxima entspricht dabei einem Reflexionspunkt R. Der zeitliche Bezug der Maxima zu dem Aussendezeitpunkt des Ultraschallsendesignals (Empfangszeitpunkt der Maxima) wird dabei erfasst und die Entfernungen zu den Reflexionspunkten zum betreffenden Ultraschallwandler aus einer Signallaufzeit zwischen dem Aussendezeitpunkt und dem Empfangszeitpunkt ermittelt, der sich aus der zeitlichen Lage des dem Reflexionspunkt R zugeordneten Maximums der Signalverlaufsangabe ergibt.

In einem dreidimensionalen Erfassungsbereich ergibt sich somit entsprechend der Anzahl der Maxima des Ultraschallempfangssignals eine entsprechende Anzahl von halbkugelförmigen Sphären, wenn der Ultraschallwandler 2 zum Senden des Ultraschall-Sendesignals und der Ultraschallwandler zum Empfangen des Ultraschall-Empfangssignals identisch sind, und eine entsprechende Anzahl von ellipsoiden Sphären, wenn der das Ultraschallsendesignal sendende Ultraschallwandler 2 und der das Ultraschallempfangssignal empfangende Ultraschallwandler sich an verschiedenen Positionen befinden. Die Sphären definieren mögliche Reflexionspunkte aus der Laufzeitmessung. Kandidaten für Reflexionspunkte R können sich jedoch nur dort befinden, wo die entsprechenden sphärischen oder ellipsoiden Sphären von mehreren oder allen Ultraschallwandlern 2 Schnittpunkte aufweisen. Kandidaten für Reflexionspunkte ergeben sich, weil die Zuordnungen von Abständen zu dem realen Reflexionspunkt R nicht bekannt sind.

Im Idealfall entspricht die Anzahl von tatsächlichen realen Reflexionspunkten R der maximalen Anzahl der Maxima in den Signalverlaufsangaben der empfangenden Ultraschallwandler. Da sich jedoch aus den Signallaufzeiten bezüglich jedes der Maxima der Signalverlaufsangaben eine Abstandsangabe für die Reflexionspunkte ergibt, können sich aus der Kombination von mehreren der Abstandsangaben, die verschiedenen Reflexionspunkten zuzuordnen sind, nicht existierende Reflexionspunkte ergeben.

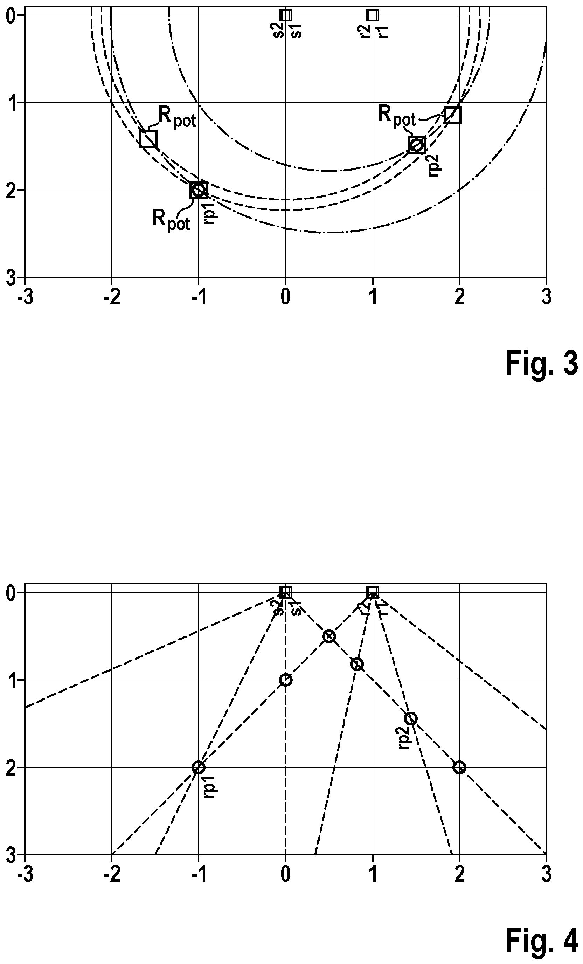

Dies ist beispielhaft anhand des 2D Beispiels in Figur 3 dargestellt, die ein Diagramm mit gemessenen Abstandsverläufen für mögliche Reflexionspunkte (Sphären) zeigt. Man erkennt für den zweidimensionalen Fall mehrere Kandidaten für Reflexionspunkte $R_{pot}$, die sich aus den Schnittpunkten der ellipsoiden und kreisförmigen Abstandsverläufe ergeben. Von den ermittelten Schnittpunkten entsprechen jedoch nur zwei realen Reflexionspunkten.

In Schritt S4 werden zudem für jeweils zwei Ultraschallempfangssignale, die von Ultraschallwandlern derselben Sensorbaugruppe 7 empfangen werden, eine oder mehrere Phasendifferenzen aus einander entsprechenden Maxima der beiden Signalverlaufsangaben der Ultraschallempfangssignale bestimmt. Aufgrund der örtlichen Nachbarschaft der Ultraschallwandler einer Sensorbaugruppe 7 haben die beiden Signalverlaufsangaben zu fast demselben Empfangszeitpunkt ein Maximum. Die Maxima entsprechen einander, wenn der zeitliche Unterschied zwischen den Empfangszeitpunkten der Maxima kleiner ist als der Quotient aus der Distanz zwischen den beiden Ultraschallwandlern und der Schallgeschwindigkeit. An dem arithmetischen Mittelwert zwischen diesen beiden Empfangszeitpunkten wird dann die zugehörige Phasendifferenz bestimmt.

In Schritt S5 werden allen ermittelten Phasendifferenzen jeweils Richtungsangaben zugeordnet, die angeben, aus welchen möglichen Richtungen das Ultraschallempfangssignal empfangen worden sein kann. Die Zuordnung kann durch Auslesen einer Lookup-Tabelle oder durch eine entsprechende Abbildungsfunktion erfolgen. Wenn die Ultraschallwandler 2 einen größeren Abstand zueinander aufweisen als eine halbe Wellenlänge des Ultraschallsignals, kann jeweils eine ermittelte Phasendifferenz statt einer mehreren Richtungen zugeordnet werden. Mögliche Reflexionspunkte erstrecken sich entlang der so bestimmten Richtungen.

Richtungsangaben entsprechen Winkeln in sphärischen Koordinaten und können immer angegeben werden, solange die Phasendifferenzen von mindesten drei Ultraschallwandlern 2 die nicht in einer Linie angeordnet sind, ausgewertet werden. Die Anordnung der Ultraschallwandler 2 kann eine kleinste Kreispackung, T-förmig , L-förmig oder zufällig sein.

Insbesondere, wenn die Ultraschallwandler einer Sensorbaugruppe einen Abstand zueinander aufweisen, der größer ist als eine halbe Wellenlänge, können sich für eine detektierte Phasendifferenz mehrere Richtungsangaben ergeben. Die Richtungsangaben werden als sphärische Winkel bezüglich der Flächennormale der Schwingungsmembran des betreffenden Ultraschallwandlers 2 angegeben.

Dies ist beispielhaft in Figur 4 dargestellt, die für den zweidimensionalen Fall ein Diagramm mit Richtungsangaben für mögliche Reflexionspunkte zeigt, die sich aus von zwei Sensorbaugruppen 7 gemessenen Phasendifferenzen ergeben. Man erkennt für jede Sensorbaugruppe 7 mehrere mögliche Richtungen zu etwaigen Reflexionspunkten. Die Schnittpunkte der Richtungen (Linien) entsprechen Kandidaten für Reflexionspunkte, Im gezeigten Beispiel existieren jedoch nur zwei reale Reflexionspunkte R.

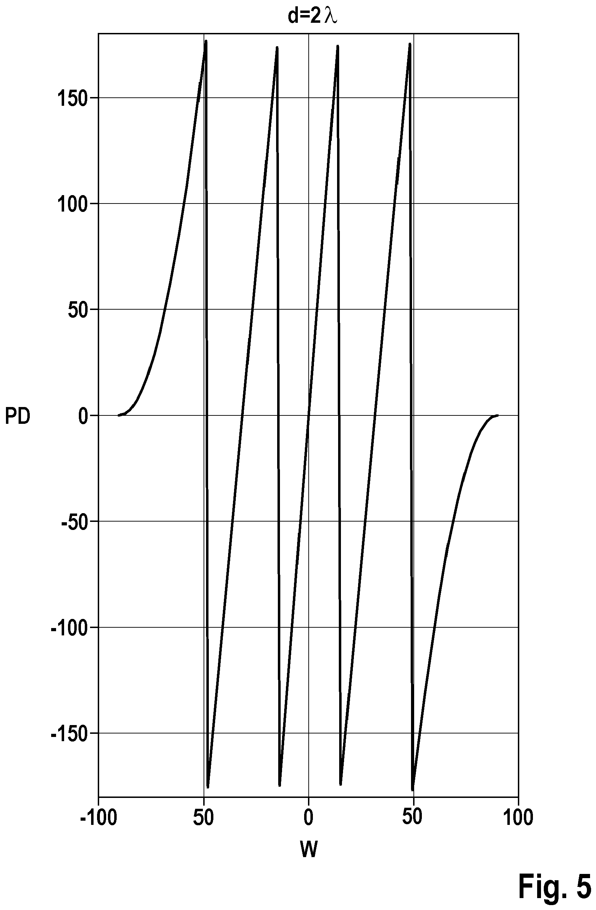

Je nach Abstand zwischen den Ultraschallwandlern einer Sensorbaugruppe 7 können sich bezüglich einer festgestellten Phasendifferenz eine oder mehrere Richtungsangaben, d. h. eine oder mehrere sphärische Winkel, ergeben. Diese Richtungsangaben ermöglichen eine Plausibilisierung der durch die Signallaufzeitmessung erhaltenen Kandidaten für Reflexionspunkte. Dies ist beispielhaft in dem Diagramm der Figur 5 dargestellt. Das Diagramm zeigt den Verlauf der Phasendifferenz PD (in Winkelgraden) über einer Empfangsrichtung des Ultraschallempfangssignals für zwei mit der doppelten Wellenlänge beabstandete Ultraschallwandler 2. Man erkennt, dass für eine Phasendifferenz PD mehrere Empfangsrichtungen W (in Winkelgraden) existieren können.

Eine bauliche Einschränkung von herkömmlichen Sensorbaugruppen 7, dass die Ultraschallwandler 2 bezüglich ihrer Mittelpunkte mit einem Abstand von kleiner als einer halben Wellenlänge bezüglich der Ultraschallsendefrequenz anzuordnen sind, besteht hier nicht, da die Positionen der Reflexionspunkte R nicht ausschließlich aus den Richtungsangaben ermittelt werden sollen.

In Schritt S6 erfolgt nun die Auswertung der Signalverlaufsangaben und der Richtungsangaben, um Positionen für Reflexionspunkte R im Erfassungsbereich E zu erhalten, die Angaben über die vorhandenen Umgebungsobjekte O darstellen. Die Plausibilisierung kann auf verschiedene Arten erfolgen.

Die zuvor über die Laufzeitmessung bestimmten Kandidaten für Reflexionspunkte können nun mithilfe der Richtungsangaben plausibilisiert werden, so dass nur diejenigen der Kandidaten für Reflexionspunkte ausgewählt werden, die bezüglich einer Sensorbaugruppe 7 in einer detektierten Richtung liegen.

Gleichermaßen können aus Richtungsangaben durch Schnittpunkte von mindestens zwei der Richtungen Kandidaten für Reflexionspunkte ermittelt werden. Aus diesen Kandidaten für Reflexionspunkte können dann diejenigen als reale Reflexionspunkte R ausgewählt werden, zu denen eine passende Abstandsmessung aus der Signallaufzeitmessung vorliegt.

Alternativ können sowohl aus der Signallaufzeitmessung als auch der Phasendifferenzmessung die möglichen Kandidaten für die Reflexionspunkte ermittelt werden und nur diejenigen Kandidaten für Reflexionspunkte als reale Reflexionspunkte R bestimmt werden, die durch die Signallaufzeitmessung und die Phasendifferenzmessung bestätigt werden.

Die Ermittlung der Kandidaten für Reflexionspunkte aus der Signallaufzeitmessung kann wie folgt durchgeführt werden. Zunächst erhält man die Abstände gemessen durch $N_r$ empfangene Ultraschallwandler $b_1, b_2,..., b_{N_s}$ aus der Empfangszeit $t_r$ (mit $T = \{t_r, r = 1,2,,..., N_r\}$) durch $b_r = t_r c$, wobei c der Schallgeschwindigkeit mit c = 343 m/s entspricht. Der Index r gibt den Index des jeweiligen empfangenden Ultraschallwandlers 2 an.

Der Gesamtsignalweg $b_r$ von der Position $\boldsymbol{x}_s$ des sendenden Ultraschallwandlers 2 über die Position $\boldsymbol{o}$ des Reflexionspunktes zu der Position $\boldsymbol{x}_r$ des empfangenen Ultraschallwandlers 2 entspricht

$$b_r = |\boldsymbol{x}_s - \boldsymbol{o}| + |\boldsymbol{x}_r - \boldsymbol{o}|.$$

Mit $N_r$ Gesamtsignalwegen $\boldsymbol{b} = (b_1 \ldots b_{N_r})^T$ werden mit dem Gauß-Newton oder Newton-Raphson Verfahren als Lösung des nichtlinearen Optimierungsproblems

$$\hat{\boldsymbol{o}} = \operatorname*{argmin}_{\boldsymbol{o}}(\boldsymbol{b} - |\boldsymbol{x}_s - \boldsymbol{o}| + |\boldsymbol{x}_r - \boldsymbol{o}|)$$

die Raumkoordinaten $\hat{\boldsymbol{o}} = (o_x\ o_y\ o_z)^T$ des Reflexionspunktes R bestimmt.

Zu obiger Formel ist der Abstand $d_s = |\boldsymbol{x}_s - \boldsymbol{o}| = b_s/2$ bekannt, da der sendende Ultraschallwandler 2 nach dem Senden des Ultraschall-Sendesignals auch einen Gesamtsignalweg $b_s$ bereitstellt. Der Abstand vom Reflexionspunkt R zum Ultraschallempfänger mit dem Index r ergibt sich damit zu $d_r = b_r - d_s$. Somit kann mit dieser Vereinfachung und durch Ausquadrieren das obige nichtlineare Optimierungsproblem in das lineare quadratische Problem mit quadratischer Nebenbedingung überführt werden

$$\boldsymbol{A}\boldsymbol{x} = \boldsymbol{d} = \begin{pmatrix} 1 & -2x_1 & -2y_1 & -2z_1 \\ \vdots & \vdots & \vdots & \vdots \\ 1 & -2x_{N_s} & -2y_{N_s} & -2z_{N_s} \end{pmatrix} \begin{pmatrix} o_x^2 + o_y^2 + o_z^2 \\ o_x \\ o_y \\ o_z \end{pmatrix} = \begin{pmatrix} d_1^2 - x_1^2 - y_1^2 - z_1^2 \\ \vdots \\ d_{N_s}^2 - x_{N_s}^2 - y_{N_s}^2 - z_{N_s}^2 \end{pmatrix},$$

wobei $x_i, y_i, z_i$, $i = 1, \ldots, N_r$ den Raumpositionen des sendenden bzw. der empfangenen Ultraschallwandler 2 entsprechen. Entsprechend einem Verfahren der linearen Algebra kann der Lösungsvektor $\boldsymbol{d}$ und somit die Raumkoordinaten $\hat{\boldsymbol{o}} = (o_x\ o_y\ o_z)^T$ für einen Reflexionspunkt R ermittelt werden, wie es beispielsweise in der Druckschrift Norrdine, A., "An Algebraic Solution to the Mulitlateration Problem", 2012, International Conference on Indoor Positioning and Indoor Navigation (IPIN), April 1, 2012, offenbart ist.

Zur Bestimmung der Richtungsangaben werden die Phasendifferenzen $\Phi_{meas} = (\varphi_{12}\ \varphi_{13}\ \varphi_{23})^T$ zwischen den Ultraschallempfangssignalen von jeweils zwei Ultraschallwandlern 2 derselben Sensorbaugruppe 7 zu den Zeitpunkten zwischen zwei einander entsprechenden, d.h. lokalen Maxima der Signalverlaufsangabe der jeweils zwei betrachteten Ultraschall-Empfangssignale bestimmt. Diese beiden einander entsprechenden Maxima müssen eine zeitliche Differenz zueinander aufweisen, die kleiner ist als der äquivalente Abstand der betrachteten Ultraschallwandler 2.

Weiterhin werden jeder Phasendifferenz $\Phi_{meas}$ eine oder mehrere Richtungsangaben $\hat{\theta} = (\vartheta\ \varphi)^T$ des Winkels (Azimutwinkel $\vartheta$, Elevationswinkel $\varphi$) bestimmt, die möglichen Richtungen des Eintreffens des entsprechenden Ultraschallempfangssignals angeben. Da die Abstände zwischen den Ultraschallwandlern 2 einer Sensorbaugruppe 7 auch größer als eine halbe Wellenlänge sein können, können mehrere Richtungswinkel für mögliche Reflexionspunkte bestimmter Phasendifferenzen ermittelt werden. Die Funktion $\Phi(\boldsymbol{\theta})\colon \mathbb{R}^2 \to \mathbb{R}^3$ kann analytisch oder messtechnisch bestimmt werden. wobei die Funktion $\Phi(\boldsymbol{\theta})$ $\vartheta \in \left[-\frac{\pi}{2}, \frac{\pi}{2}\right)$ und $\varphi \in \left[-\frac{\pi}{2}, \frac{\pi}{2}\right)$ z. B. durch drei 2-dimensionale Lookup-Tabellen von Phasendifferenzen $\Phi(\theta)$ für jeden Azimutwinkel $\vartheta$ und Elevationswinkel $\varphi$ bestimmt ist.

Durch Lösung des Optimierungsproblems

$$\hat{\boldsymbol{\theta}} = \operatorname*{argmin}_{\boldsymbol{\theta}}(\|\Phi(\boldsymbol{\theta}) - \Phi_{mess}\|_2^2)$$

können mehrere Richtungsangaben pro Phasendifferenz $\Phi_{mess}$ bestimmt werden.

Zur Bestimmung der Richtungsangaben können die gemessenen Phasendifferenzen $\Phi_{meas}$ mithilfe entsprechender Lookup-Tabellen die entsprechende(n) Richtungsangaben transferiert werden. Die Winkel der Richtungsangaben entsprechen den Koordinaten, an denen die Differenz zwischen den gemessenen Phasendifferenzen $\Phi_{meas}$ und den erwarteten Phasendifferenzen ein lokales Minimum aufweist. Das Minimum muss geringer sein als ein Schwellenwert, um gültig zu sein.

Für jede Kombination aussendenden und empfangenden Ultraschallwandlern 2 können für jede Abstandsangabe mehrere mögliche Richtungsangaben angegeben werden.

Durch Zusammenführen der aus den Richtungsangaben und der durch die Laufzeitmessung bestimmten möglichen Reflexionspunkten werden die real existierenden Reflexionspunkte bestimmt. Vorzugsweise werden aus den Richtungsangaben vorab Kandidaten für Reflexionspunkte als Schnittpunkte zwischen den ermittelten Richtungen und Kandidaten für Reflexionspunkte aus mehreren der Laufzeitmessungen bestimmt und die so erhaltenen Kandidaten für Reflexionspunkte gegeneinander plausibilisiert, d.h. als reale Reflexionspunkte bestätigt oder verworfen.

Kandidaten für Reflexionspunkte ergeben sich aus einer Kombination von Abstandsangaben als Ergebnis der Laufzeitmessung von mehreren Ultraschallwandlern 2. Von jedem der Kandidaten der Reflexionspunkte wird die erwartete Phasendifferenz zwischen den empfangenden Ultraschallwandlern 2 bestimmt. Dies erfolgt entsprechend einem Unterschied zwischen den Längen der Signalwege von dem möglichen Reflexionspunkt zu den beiden betreffenden Ultraschallwandlern 2. Ein Kandidat für einen Reflexionspunkt wird als realer Reflexionspunkt R angenommen, wenn die erwarteten Phasendifferenzen in etwa, d.h. innerhalb einer vorgegebenen Toleranz, den gemessenen Phasendifferenzen $\Phi_{meas}$ entsprechen. Wenn dies nicht der Fall ist, wird der mögliche Reflexionspunkt verworfen.

Bezugszeichenliste

1 Ultraschall-Sensorsystem
2 Ultraschallwandler
3 Schwingmembran
4 Piezoaktuator
5 Ansteuerelektronik
6 Steuereinheit
7 Sensorbaugruppe

**Patentansprüche**

1. Verfahren zum Betreiben eines Ultraschall-Sensorsystems (1) mit mehreren Ultraschallsendern und mehreren Ultraschallempfängern zum Erfassen von Umgebungsobjekten (O) in einem Erfassungsbereich, wobei insbesondere jeweils einer der Ultraschallsender und jeweils einer der Ultraschallempfänger als Ultraschallwandler (2) ausgebildet sind, mit folgenden Schritten:

   - Aussenden eines Ultraschallsendesignals durch mehrere der Ultraschallsender und Empfangen eines jeweiligen Ultraschallempfangssignals durch die Ultraschallempfänger,
   - Auswerten der empfangenen Ultraschallempfangssignale, um aus einer Laufzeitmessung eine Signalverlaufsangabe zu bestimmen, die den zeitlichen Verlauf der Signalstärke mit Bezug zu dem Aussendezeitpunkt des Ultraschallsendesignals angibt, wobei Signallaufzeiten jedes der Maxima der Signalverlaufsangabe ermittelt werden, die einen Abstand von möglichen Reflexionspunkten angeben;
   - Auswerten der empfangenen Ultraschallempfangssignale, um in einer Phasendifferenzmessung Phasendifferenzen ($\Phi_{meas}$) zwischen jeweils zwei Ultraschallempfangssignalen von mindestens einem Paar von Ultraschallempfängern einer Sensorbaugruppe (7) zu den Zeitpunkten einander entsprechender Maxima bereitzustellen, wobei den Phasendifferenzen ($\Phi_{meas}$) jeweils Richtungsangaben zugeordnet werden, die Richtungen zu möglichen Reflexionspunkten angeben;
   - Ermitteln von realen Reflexionspunkten (R) abhängig von dem Abstand von möglichen Reflexionspunkten und abhängig von den Richtungen zu möglichen Reflexionspunkten.

2. Verfahren nach Anspruch 1, wobei die empfangenen Ultraschallempfangssignale ausgewertet werden, um aus den jeweiligen Signalverlaufsangaben Abstandsangaben zu bestimmen, wobei die Abstandsangaben für die Maxima der Signalverlaufsangaben ermittelt werden, um durch Kombinationen von Abstandsmessungen Kandidaten für Reflexionspunkte anzugeben.

3. Verfahren nach einem der Ansprüche 1 bis 2, wobei die empfangenen Ultraschallempfangssignale ausgewertet werden, um die Phasendifferenzen ($\Phi_{meas}$) zwischen jeweils zwei Ultraschallempfangssignalen von mindestens einem Paar von Ultraschallempfängern einer Sensorbaugruppe (7), insbesondere zu einem mittleren Zeitpunkt zwischen den Zeitpunkten von zwei Maxima, bereitzustellen, deren zeitliche Differenz geringer ist eine Schalllaufzeit zwischen den jeweils zwei Ultraschallempfängern der Sensorbaugruppe (7).

4. Verfahren nach einem der Ansprüche 1 bis 3, wobei abhängig von den Abständen zu möglichen Reflexionspunkten aus der Laufzeitmessung Kandidaten von Reflexionspunkten ermittelt werden, wobei aus den Kandidaten von Reflexionspunkten abhängig von den Richtungen zu den möglichen Reflexionspunkten aus der Phasendifferenzmessung die realen Reflexionspunkte (R) ausgewählt werden.

5. Verfahren nach einem der Ansprüche 1 bis 3, wobei abhängig von den Richtungen zu möglichen Reflexionspunkten aus der Phasendifferenzmessung und Abständen gemessen durch einen Sensor, Kandidaten von Reflexionspunkten ermittelt werden, wobei aus den Kandidaten von Reflexionspunkten abhängig von den Abständen unterschiedlicher Sensoren von den möglichen Reflexionspunkten aus der Laufzeitmessung die realen Reflexionspunkte (R) ausgewählt werden.

6. Verfahren nach einem der Ansprüche 1 bis 3, wobei abhängig von den Abständen zu möglichen Reflexionspunkten aus der Laufzeitmessung Kandidaten von Reflexionspunkten ermittelt werden, wobei abhängig von den Richtungen zu möglichen Reflexionspunkten aus der Phasendifferenzmessung Kandidaten von Reflexionspunkten ermittelt werden, wobei reale Reflexionspunkte als diejenigen Reflexionspunkte ermittelt werden, die als Kandidat für einen Reflexionspunkt sowohl aus der Laufzeitmessung als auch aus der Reflexionsmessung ermittelt worden sind.

7. Verfahren nach einem der Ansprüche 4 und 6, wobei die Kandidaten für Reflexionspunkte aus der Laufzeitmessung mithilfe eines Optimierungsproblems ermittelt werden, als die Reflexionspunkte, für die ein Fehler bezüglich der gemessenen Signallaufstrecke unter einem vorgegebenen Schwellenwert liegt.

8. Verfahren nach einem der Ansprüche 4 und 6, wobei als Kandidaten für Reflexionspunkte aus den Laufzeitmessungen nur diejenigen angenommen werden, die jeweils einen Abstand von einem jeweiligen Ultraschallwandler (2) aufweist, der sich aus der Signallaufzeit eines von dem Ultraschallwandler (2) ausgesendeten Ultraschallsendesignals und der Signallaufzeit eines von dem Ultraschallwandler (2) empfangenen Ultraschallempfangssignals ergibt.

9. Verfahren nach einem der Ansprüche 5 und 6, wobei die möglichen Reflexionspunkte aus der Phasendifferenzmessung durch Lösen eines Optimierungsproblems ermittelt werden, als die Reflexionspunkte, für die ein Fehler bezüglich der gemessenen Phasendifferenzen unter einem vorgegebenen Schwellenwert liegt.

10. Vorrichtung, insbesondere Steuereinheit, zum Betreiben eines Ultraschall-Sensorsystems (1) mit mehreren Ultraschallsendern und mehreren Ultraschallempfängern zum Erfassen von Umgebungsobjekten (O) in einem Erfassungsbereich, wobei insbesondere die Ultraschallsender und Ultraschallempfänger als Ultraschallwandler (2) ausgebildet sind, wobei die Vorrichtung ausgebildet ist, um folgende Schritte auszuführen:

 - Aussenden eines Ultraschallsendesignals durch mehrere der Ultraschallsender und Empfangen eines jeweiligen Ultraschallempfangssignals durch die Ultraschallempfänger,
 - Auswerten der empfangenen Ultraschallempfangssignale, um in einer Laufzeitmessung eine Signalverlaufsangabe zu bestimmen, die den zeitlichen Verlauf der Signalstärke mit Bezug zu dem Aussendezeitpunkt des Ultraschallsendesignals angibt, wobei Signallaufzeiten jedes der Maxima der Signalverlaufsangabe ermittelt werden, die einen Abstand von möglichen Reflexionspunkten angeben;
 - Auswerten der empfangenen Ultraschallempfangssignale, um in einer Phasendifferenzmessung Phasendifferenzen ($\Phi_{meas}$) zwischen jeweils zwei Ultraschallempfangssignalen von mindestens einem Paar von Ultraschallempfängern einer Sensorbaugruppe (7) zu den Zeitpunkten einander entsprechender Maxima bereitzustellen, wobei den Phasendifferenzen ($\Phi_{meas}$) jeweils Richtungsangaben zugeordnet werden, die Richtungen zu möglichen Reflexionspunkten angeben;
 - Ermitteln von realen Reflexionspunkten (R) abhängig von dem Abstand von möglichen Reflexionspunkten und abhängig von den Richtungsangaben.

11. Ultraschallwandlersystem (1) mit einer Vorrichtung nach Anspruch 10 und mit mehreren Ultraschallwandlern (2), von denen mindestens zwei in einer Sensorbaugruppe (7) angeordnet sind

12. Ultraschallwandlersystem (1) nach Anspruch 11, wobei mit einer Vorrichtung nach Anspruch 10 und mit mehreren Ultraschallwandlern (2), von denen mindestens zwei in einer Sensorbaugruppe (7) angeordnet sind

**Geänderte Patentansprüche gemäss Regel 137(2) EPÜ.**

1. Verfahren zum Betreiben eines Ultraschall-Sensorsystems (1) mit mehreren Ultraschallsendern und mehreren Ultraschallempfängern zum Erfassen von Umgebungsobjekten (O) in einem Erfassungsbereich, wobei insbesondere jeweils einer der Ultraschallsender und jeweils einer der Ultraschallempfänger als Ultraschallwandler (2) ausgebildet sind, wobei mindestens zwei der Ultraschallwandler (2) in einer Sensorbaugruppe (7) angeordnet sind, mit folgenden Schritten:

   - Aussenden eines Ultraschallsendesignals durch mehrere der Ultraschallsender und Empfangen eines jeweiligen Ultraschallempfangssignals durch die Ultraschallempfänger,
   - Auswerten der empfangenen Ultraschallempfangssignale, um aus einer Laufzeitmessung eine Signalverlaufsangabe zu bestimmen, die den zeitlichen Verlauf der Signalstärke mit Bezug zu dem Aussendezeitpunkt des Ultraschallsendesignals angibt, wobei Signallaufzeiten jedes der Maxima der Signalverlaufsangabe ermittelt werden, die einen Abstand von möglichen Reflexionspunkten angeben;
   - Auswerten der empfangenen Ultraschallempfangssignale, um in einer Phasendifferenzmessung Phasendifferenzen ($\Phi_{meas}$) zwischen jeweils zwei Ultraschallempfangssignalen von mindestens einem Paar von Ultraschallempfängern einer Sensorbaugruppe (7) zu den Zeitpunkten einander entsprechender Maxima bereitzustellen, wobei den Phasendifferenzen ($\Phi_{meas}$) jeweils Richtungsangaben zugeordnet werden, die Richtungen zu möglichen Reflexionspunkten angeben;
   - Ermitteln von realen Reflexionspunkten (R) abhängig von dem Abstand von möglichen Reflexionspunkten und abhängig von den Richtungen zu möglichen Reflexionspunkten.

2. Verfahren nach Anspruch 1, wobei die empfangenen Ultraschallempfangssignale ausgewertet werden, um aus den jeweiligen Signalverlaufsangaben Abstandsangaben zu bestimmen, wobei die Abstandsangaben für die Maxima der Signalverlaufsangaben ermittelt werden, um durch Kombinationen dieser Bestimmungen der Abstandsangaben Kandidaten für Reflexionspunkte anzugeben.

3. Verfahren nach einem der Ansprüche 1 bis 2, wobei die empfangenen Ultraschallempfangssignale ausgewertet werden, um die Phasendifferenzen ($\Phi_{meas}$) zwischen jeweils zwei Ultraschallempfangssignalen von mindestens einem Paar von Ultraschallempfängern einer Sensorbaugruppe (7), insbesondere zu einem mittleren Zeitpunkt zwischen den Zeitpunkten von zwei Maxima, bereitzustellen, deren zeitliche Differenz geringer ist als eine Schalllaufzeit zwischen den jeweils zwei Ultraschallempfängern der Sensorbaugruppe (7).

4. Verfahren nach einem der Ansprüche 1 bis 3, wobei abhängig von den Abständen zu möglichen Reflexionspunkten aus der Laufzeitmessung Kandidaten von Reflexionspunkten ermittelt werden, wobei aus den Kandidaten von Reflexionspunkten abhängig von den Richtungen zu den möglichen Reflexionspunkten aus der Phasendifferenzmessung die realen Reflexionspunkte (R) ausgewählt werden.

5. Verfahren nach einem der Ansprüche 1 bis 3, wobei abhängig von den Richtungen zu möglichen Reflexionspunkten aus der Phasendifferenzmessung Kandidaten von Reflexionspunkten ermittelt werden, wobei aus den Kandidaten von Reflexionspunkten abhängig von den Abständen unterschiedlicher Sensoren von den möglichen Reflexionspunkten aus der Laufzeitmessung die realen Reflexionspunkte (R) ausgewählt werden.

6. Verfahren nach einem der Ansprüche 1 bis 3, wobei abhängig von den Abständen zu möglichen Reflexionspunkten aus der Laufzeitmessung Kandidaten von Reflexionspunkten ermittelt werden, wobei abhängig von den Richtungen zu möglichen Reflexionspunkten aus der Phasendifferenzmessung Kandidaten von Reflexionspunkten ermittelt werden, wobei reale Reflexionspunkte als diejenigen Reflexionspunkte ermittelt werden, die als Kandidat für einen Reflexionspunkt sowohl aus der Laufzeitmessung als auch aus der Phasendifferenzmessung ermittelt worden sind.

7. Verfahren nach einem der Ansprüche 4 und 6, wobei die Kandidaten für Reflexionspunkte aus der Laufzeitmessung mithilfe eines Optimierungsproblems ermittelt werden, als die Reflexionspunkte, für die ein Fehler bezüglich der gemessenen Signallaufstrecke unter einem vorgegebenen Schwellenwert liegt.

8. Verfahren nach einem der Ansprüche 4 und 6, wobei als Kandidaten für Reflexionspunkte aus den Laufzeitmessungen nur diejenigen angenommen werden, die jeweils einen Abstand von einem jeweiligen Ultraschallwandler (2) aufweisen, der sich aus der Signallaufzeit eines von dem Ultraschallwandler (2) ausgesendeten Ultraschallsendesignals und der Signallaufzeit eines von dem Ultraschallwandler (2) empfangenen Ultraschallempfangssignals ergibt, wobei die Abstände zu den Reflexionspunkten durch das Produkt der halben Signallaufzeit und der Schallgeschwindigkeit ermittelt werden.

9. Verfahren nach einem der Ansprüche 5 und 6, wobei die möglichen Reflexionspunkte aus der Phasendifferenzmessung durch Lösen eines Optimierungsproblems ermittelt werden, als die Reflexionspunkte, für die ein Fehler bezüglich der gemessenen Phasendifferenzen unter einem vorgegebenen Schwellenwert liegt.

10. Vorrichtung, insbesondere Steuereinheit, zum Betreiben eines Ultraschall-Sensorsystems (1) mit mehreren Ultraschallsendern und mehreren Ultraschallempfängern zum Erfassen von Umgebungsobjekten (O) in einem Erfassungsbereich, wobei insbesondere die Ultraschallsender und Ultraschallempfänger als Ultraschallwandler (2) ausgebildet sind, wobei die Vorrichtung ausgebildet ist, um folgende Schritte auszuführen:

- Aussenden eines Ultraschallsendesignals durch mehrere der Ultraschallsender und Empfangen eines jeweiligen Ultraschallempfangssignals durch die Ultraschallempfänger,
- Auswerten der empfangenen Ultraschallempfangssignale, um in einer Laufzeitmessung eine Signalverlaufsangabe zu bestimmen, die den zeitlichen Verlauf der Signalstärke mit Bezug zu dem Aussendezeitpunkt des Ultraschallsendesignals angibt, wobei Signallaufzeiten jedes der Maxima der Signalverlaufsangabe ermittelt werden, die einen Abstand von möglichen Reflexionspunkten angeben;
- Auswerten der empfangenen Ultraschallempfangssignale, um in einer Phasendifferenzmessung Phasendif-ferenzen ($\Phi_{meas}$) zwischen jeweils zwei Ultraschallempfangssignalen von mindestens einem Paar von Ultraschallempfängern einer Sensorbaugruppe (7) zu den Zeitpunkten einander entsprechender Maxima bereitzu-stellen, wobei den Phasendifferenzen ($\Phi_{meas}$) jeweils Richtungsangaben zugeordnet werden, die Richtungen zu möglichen Reflexionspunkten angeben;
- Ermitteln von realen Reflexionspunkten (R) abhängig von dem Abstand von möglichen Reflexionspunkten und abhängig von den Richtungsangaben.

11. Ultraschallwandlersystem (1) mit einer Vorrichtung nach Anspruch 10 und mit mehreren Ultraschallwandlern (2), von denen mindestens zwei in einer Sensorbaugruppe (7) angeordnet sind

12. Ultraschallwandlersystem (1) nach Anspruch 11, wobei mit einer Vorrichtung nach Anspruch 10 und mit mehreren Ultraschallwandlern (2), von denen mindestens zwei in einer Sensorbaugruppe (7) angeordnet sind.

Fig. 1

Start

Nacheinander Aussenden eines Ultraschallsendesignals durch Ultraschallwandler ——S1

Empfangen von Ultraschallempfangssignalen
und generieren von Signalverlaufsangaben ——S2

Bereitstellen der Signalverlaufsangaben
mit jeweils zeitlichem Bezug zu
dem betreffenden Ultraschallsendesignal
in der Steuereinheit ——S3

Bestimmen von Phasendifferenzen zwischen
den Ultraschallempfangssignalen von jeweils
zwei der Ultraschallwandler einer
Sensorbaugruppe ——S4

Zuordnen Richtungsangaben zu den
ermittelten Phasendifferenzen ——S5

Plausibilisieren der Ergebnisse einer
Laufzeitmessung basierend auf den
Signalverlaufsangaben und der
Phasendifferenzmessung ——S6

Fig. 2

Fig. 3

Fig. 4

d=2$\lambda$

Fig. 5

Europäisches
Patentamt

European
Patent Office

Office européen
des brevets

# EUROPÄISCHER RECHERCHENBERICHT

**Nummer der Anmeldung**

EP 20 18 7193

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2006 033693 A1 (DENSO CORP [JP]) 8. Februar 2007 (2007-02-08) | 1-12 | INV. G01S15/931 |
| Y | * das ganze Dokument * | 5 | G01S15/87 |
| | ----- | | G01S15/42 |
| X | DE 10 2006 032125 A1 (VALEO SCHALTER & SENSOREN GMBH [DE]) 10. Januar 2008 (2008-01-10) | 1-12 | G01S7/539 |
| Y | * Absätze [0030] - [0037], [0046] - [0056], [0061]; Abbildungen 1-10 * | 5 | |
| | ----- | | |
| Y | DE 10 2017 107386 A1 (VALEO SCHALTER & SENSOREN GMBH [DE]) 11. Oktober 2018 (2018-10-11) * Absätze [0005] - [0016], [0020], [0046]; Abbildungen 1-5 * | 5 | |
| | ----- | | |

**RECHERCHIERTE SACHGEBIETE (IPC)**

G01S
G10K

Der vorliegende Recherchenbericht wurde für alle Patentansprüche erstellt

| Recherchenort | Abschlußdatum der Recherche | Prüfer |
|---|---|---|
| München | 18. September 2020 | Schmelz, Christian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 18 7193

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-09-2020

| Im Recherchenbericht angeführtes Patentdokument | Datum der Veröffentlichung | Mitglied(er) der Patentfamilie | Datum der Veröffentlichung |
|---|---|---|---|
| DE 102006033693 A1 | 08-02-2007 | DE 102006033693 A1<br>FR 2888943 A1<br>JP 2007024770 A<br>US 2008165620 A1 | 08-02-2007<br>26-01-2007<br>01-02-2007<br>10-07-2008 |
| DE 102006032125 A1 | 10-01-2008 | DE 102006032125 A1<br>EP 2035858 A1<br>WO 2008003364 A1 | 10-01-2008<br>18-03-2009<br>10-01-2008 |
| DE 102017107386 A1 | 11-10-2018 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DRUCKSCHRIFT NORRDINE, A.** An Algebraic Solution to the Mulitlateration Problem. *International Conference on Indoor Positioning and Indoor Navigation (IPIN),* 01. April 2012